# EUROPEAN PATENT APPLICATION

(11) **EP 4 382 334 A1**
(43) Date of publication of application: **12.06.2024**
(21) Application number: 23208725.4
(22) Date of filing: 09.11.2023
(51) Int. Cl.: B60K 17/28, B60K 6/42, B60K 6/52, F16H 57/031, B60K 17/356, F16H 57/037, A62C 27/00, B60K 6/547, B60K 25/06, F16H 3/089

(54) **IMPROVED TORQUE DISTRIBUTOR SYSTEM FOR A HEAVY VEHICLE**

(30) Priority: 15.11.2022 IT 202200023520
(71) Applicant: IVECO S.P.A., 10156 Torino (IT)
(72) Inventor: BERNARDINI, Alessandro, 10156 TORINO (IT); AIMO BOOT, Marco, 10156 TORINO (IT); CACCIATO, Gabriele, 10156 TORINO (IT); POZZATO, Alessandro, 10156 TORINO (IT); MANTOVANI, Giorgio, 10156 TORINO (IT); PEREIRA DE LEMOS, Josè Francivaldo, 10156 TORINO (IT)
(74) Representative: Studio Torta S.p.A.

(57) **Abstract**

A vehicle (100) comprising a moto-propulsion unit (101), a plurality of axles (102) and a distributor system (1) operatively connected to the moto-propulsion unit (101) and to at least one of the plurality of axles (102) for distributing torque among themselves,
the distributor system (1) comprising a casing (2) able to define a space (7) configured to house a transmission (8), and various power take-offs (11, 12, 13, 14) connected to each other by said transmission (8), the distributor system (1) comprising at least one pair of electric motors (M', M") carried by the casing (2) and operatively connectable by the transmission (8) and to the power take-offs (11, 12, 13, 14).

## Description

### CROSS-REFERENCE TO RELATED APPLICATIONS

This patent application claims priority from Italian patent application no. 102022000023520 filed on 15 November 2022, the entire disclosure of which is incorporated herein by reference.

### TECHNICAL SECTOR

This invention relates to a torque distributor system for a heavy vehicle.

This invention finds a preferred, though not exclusive, application in the distribution of torque among elements of a heavy vehicle, such as a lorry, emergency vehicle, or military vehicle. These applications will be referred to below by way of example.

### PRIOR ART

Heavy vehicles, such as lorries, emergency vehicles (like fire engines), or military vehicles (like tanks) comprise, as known, a propulsion unit configured to provide torque to one or more of the vehicle's axles. One example of this propulsion unit may be an internal combustion engine, a fuel cell engine, or an electric or hybrid motor unit.

In particular, the torque is distributed via a transmission to one or more axles of the vehicle, as known. In any case, this transmission is specifically designed for an individual traction configuration.

Thus, if you wish to change the traction mode from single or multiple axles, it is necessary to redesign the transmission.

In addition, the current transmissions are particularly bulky and heavy if they need to divide the torque to multiple axles.

In addition, if you wish to supply torque provided by the propulsion unit to other vehicle elements such as a pump, you must provide torque feedback systems or alternative drive sources. The above clearly further increases the weight, dimensions, and complications of designing the vehicle.

The need is, thus, felt to provide a system for distributing torque from one propulsion unit of a vehicle to various vehicle elements that is versatile, compact, and economical.

The purpose of this invention is to meet the needs outlined above in an optimal and inexpensive way.

### SUMMARY OF THE INVENTION

The above-mentioned purpose is achieved with a torque distributor system as claimed in the attached claims.

### BRIEF DESCRIPTION OF THE DRAWINGS

For a better understanding of this invention, a preferred embodiment is described below by way of non-limiting example and with reference to the accompanying drawings, wherein:
- Figure 1 is a schematic view of a heavy vehicle comprising a distributor system according to the invention;
- Figure 2 is a cross-section view of a distributor system according to the invention;
- Figures 3 to 22 illustrate various operating conditions of the moto-propulsion system according to the invention.

### DETAILED DESCRIPTION OF THE INVENTION

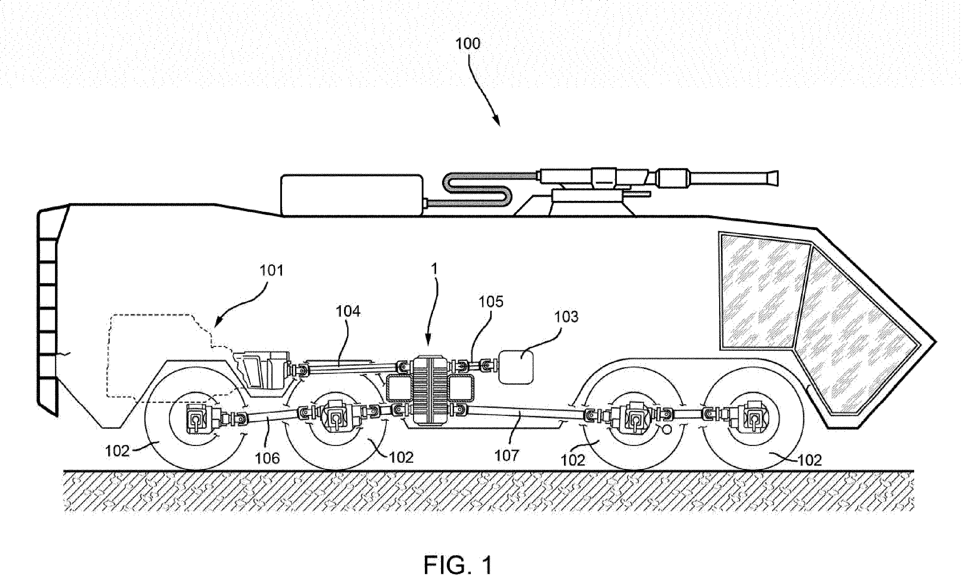

In Figure 1, reference number 100 globally denotes a heavy vehicle such as a lorry, an emergency vehicle (like a fire engine), or a military vehicle (like a tank) comprising a propulsion unit 101. The propulsion unit 101 can be an internal combustion engine, a fuel cell system, or a hybrid drive system as known in the prior art and configured to provide torque to various vehicle elements by means of a torque distributor system 1.

In particular, the vehicle 100 comprises multiple axles 102 and at least one operating element 103 such as, for example, a hydraulic pump used by the vehicle, such as a pump for a fire-protection fluid management system or a pump to generate a flow of water to disperse people.

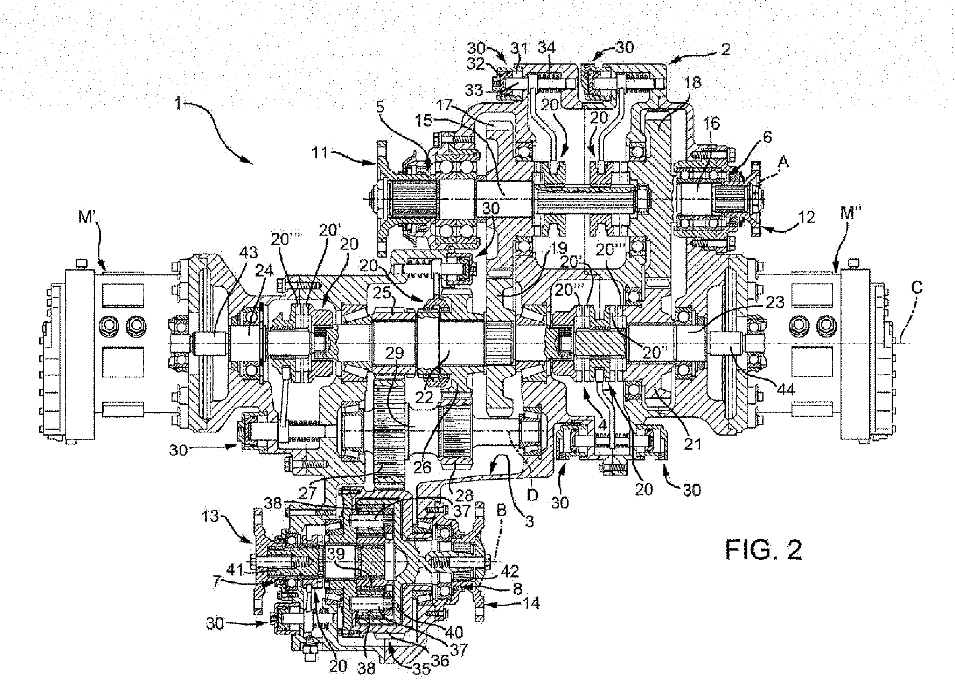

Figure 2 illustrates, in detail, the torque distributor system 1 according to the invention. The torque distributor 1 comprises a casing 2 designed to be supported by a portion fixed to the vehicle's chassis (not illustrated in detail) defining a space 3 and a transmission assembly 4 housed inside the space 3.

Clearly, the casing 2 is advantageously constructed from several parts firmly connected together in order to enable the assembly of the transmission assembly 4 in the space 3.

The casing 3 defines multiple openings 5, 6, 7, 8 configured to enable the passage of respective power take-offs 11, 12, 13, 14 as better described below, connected together by the transmission 4.

More specifically, the distributor system 1 defines four openings and respective power take-offs, preferably in pairs coaxial between them. In particular, the first and second opening 5, 6 and the first and second power take-offs 11, 12 are coaxial to an axis A while the third and fourth openings 7, 8 and the third and fourth power take-offs 13, 14 are coaxial to an axis B.

The axes A and B are, advantageously, parallel to each other and, even more preferably, are parallel to a longitudinal axis of the vehicle.

In particular, in the embodiment described, the first power take-off 11 is connected by means of a first connecting shaft 104 to the moto-propulsion unit, the second power take-off 12 is connected by means of a second shaft 105 to the operating element 103 while the third and fourth power take-offs are connected by means of respective third and fourth shafts 106, 107 to at least one rear axle 102 and a front axle 102 of the vehicle. In the example described, the third and fourth shaft 106, 107 connect to a torque of front axles 102 and a torque of rear axles 102.

In particular, the power take-offs 11, 12, 13, 14 may be shaped like plates designed to enable the connection of the above-mentioned shafts 104, 105, 106, 107 to the transmission 4.

With reference to the transmission 4, this comprises a first rotating shaft 15 and a second rotating shaft 16 where the first rotating shaft 15 is firmly connected by rotation to the first power take-off 11 and the second rotating shaft 16 is firmly connected by rotation to the second power take-off 12.

In particular, the first rotating shaft can be connected to the second rotating shaft 16 by means of a selector 20, called a selector sleeve below for clarity although it may be produced in different ways.

As illustrated, the selector sleeve 20 slides along the axis A, for example on the first rotating shaft 15 and, thus, integrally with the rotation with it and provided with teeth 20' designed to engage the teeth 20‴ integral with the second rotating shaft 16. Since these sleeves are of various kinds and embodiments, they will not be described more specifically.

The selector sleeve 20 is advantageously actuated by actuators 30, for example pneumatic actuators, i.e. comprising a chamber 31 within which a piston 32 slides integrally with a rod 33 that slides in relation to the casing 2 and integral with the sliding with the selector sleeve 20 and equipped with return elastic means 34 designed to keep the selector sleeve 20 in a predefined position, acting against the piston 32. Since these actuators are of various kinds and embodiments, they will not be described more specifically.

The transmission 8 also comprises a first gear wheel 17 carried rotationally free by the first shaft 15 and can be selectively coupled to it by means of the selector sleeve 20 and a second gear wheel 18 preferably carried rotationally fixed by the second shaft 16.

The transmission 8 comprises, as a result, a third and a fourth gear wheel 19, 21 configured to engage with the first and second gear wheels 17, 18 respectively.

In particular, the transmission 8 comprises a first support shaft 22 configured to support the third gear wheel 19 and a second support shaft 23 configured to support the fourth gear wheel 21. In particular, the first and second support shaft 22 and 23 are, between them, coaxial along a third axis C parallel to the above-mentioned axes A, B.

Specifically, the third gear wheel 19 is advantageously carried by the corresponding shaft 22 in a fixed way in relation to the rotation while the fourth gear wheel 19 is carried by the corresponding shaft 23 rotationally free.

The transmission 8 comprises a selector sleeve 20 configured to selectively connect the fourth gear wheel 21 to the shaft 23 and a selector sleeve 20 configured to selectively connect the first and second support shaft 22, 23.

The embodiment described advantageously includes a single sleeve 20 that slides along the second support shaft 23, equipped with two sets of teeth 20', 20" configured to selectively cooperate with the teeth 20‴ integral with the fourth gear wheel 21 and the first support shaft 22.

In particular, it should be noted how, in this example, the actuator 30 comprises two chambers 31 selectively pressurised alternatively between them.

The first support shaft 22 also carries a fifth and a sixth gear wheel 25, 26 advantageously carried rotationally free in relation to the fifth and a sixth gear wheel 25, 26 that can be selectively coupled by means of a selector sleeve 20 also produced in the form of that previously described, i.e. equipped with two sets of teeth 20', 20" and configured to selectively cooperate with the teeth 20‴ integral with the fifth and sixth gear wheels 25, 26.

The transmission 8 may advantageously comprise a speed jump comprising seventh and eighth gear wheels 27, 28 engaging with the above-mentioned fifth and sixth gear wheels 25, 26. In particular, the seventh and eighth gear wheels 27, 28 are rigidly rotated by a support shaft 29 extending along a longitudinal axis D, parallel to the above-mentioned axes A, B, and C.

The transmission 8 also comprises a gear 35 operationally interposed between the fourth and fifth power take-offs 13, 14 and operationally connected to one of the fifth and sixth gear wheels 25, 26, in particular, in the example described, by means of the above-mentioned speed jump.

The gear 35 is, advantageously, a gear that has a differential function between the fourth and fifth power take-offs 13, 14 and, more preferably, is a planetary/epicyclic type.

Specifically, in the embodiment illustrated, the gear 35 comprises a carrier 36 supporting multiple pins 37 supporting multiple satellites 38 engaging, on one side, with a sunwheel 39 and, on the other, with a rotating casing 40.

In particular, the carrier 36 directly engages with the seventh gear wheel 27 in the embodiment described. More specifically, the sunwheel 39 is rigidly carried by a second support shaft 41 that is fixed to the rotation with the third power take-off 13 while the rotating casing 40 is rigidly carried by a third support shaft 42 that is fixed to the rotation with the fourth power take-off 14.

The transmission 8 comprises a selector sleeve 20 configured to make the carrier 36 selectively integral with the second support shaft 41 so that the third and fourth power take-off 13, 14 directly receive, as input, the speed given by the seventh gear wheel 27 to the carrier 36 itself. In this way, the selector sleeve 20 acts as a differential block.

The torque distributor system 1 also comprises at least one torque of electric motors M', M" configured to exchange torque with, respectively, a fourth support shaft 24 coaxial to the first and second support shaft 22, 23 and with the second support shaft 23.

In the embodiment described, the torque distributor system 1 comprises a first and second electric machine M', M" equipped with corresponding operating shafts 43, 44 that are rigidly connected by rotation, respectively, to the fourth and second support shaft 24, 23.

In particular, the torque of electric machines M', M" is integrated in the casing 2, i.e. the casing 2 is shaped so as to define respective coupling portions that enable the fixing of the above-mentioned electric machines M', M".

Specifically, the fourth support shaft 24 can be selectively connected to be integral with the rotation to the first support shaft 22. In particular, it can be connected by means of a sleeve 20 of the type described above.

The two electric machines M', M" may be of any kind and size and configured to operate as a generator or electric machine. Advantageously, electricity storage means and electricity distribution means may be included that are designed to enable the passage of electricity between the two electric machines, as known and not further described below.

The vehicle 100 advantageously comprises an electric unit configured to control the actuator means 30 and, thus, the clutch of the sleeves 20 and the operation of the electric machines M', M" according to the type of operation required by the vehicle 100 from the distributor system 1.

If the vehicle 100 does not comprise the operating element 103 or comprises just one driving axle, for example front or rear, the distributor system 1 comprises covers integral with the casing 2 and designed to insulate one of the second and third or fourth power take-offs from the outside.

The operation of the embodiments described above is described in the following figures from 3 to 24, which illustrate the activated actuators and the passage of torque between the power take-offs 11, 12, 13, 14 and the two electric machines M', M".

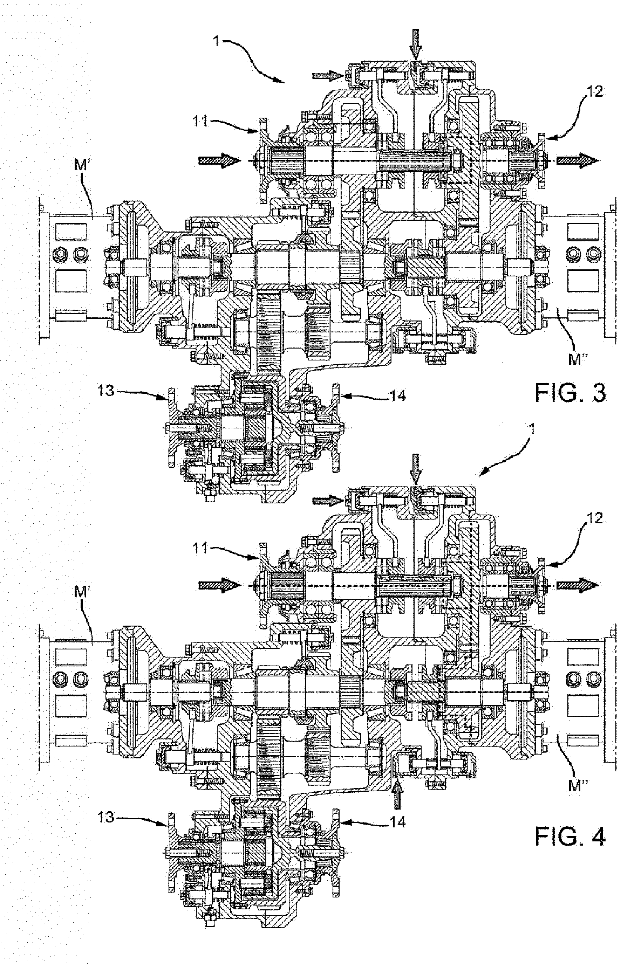

Figure 3 illustrates a first operating condition of the torque distributor system relating to the operation, in mechanical mode, of the operating element 103, i.e. of the hydraulic pump. In this operating condition, the actuator means 30 make the first and second rotating shaft 15, 16 integral so that the torque flows directly from the shaft 104 to the shaft 105, passing between the first and second power take-offs 11, 12.

Figure 4 illustrates a second operating condition of the torque distributor system relating to the operation, in hybrid mode, of the operating element 103, i.e. of the hydraulic pump. In this operating condition, the actuator means 30 make the first and the second rotating shaft 15, 16 and the fourth gear wheel 21 integral with the second support shaft 23 so that the torque provided by the shaft 104 through the first power take-off 11 is added, in the second rotating shaft 16, with the torque provided by the second electric machine M" that operates as an electric motor and passes via the second power take-off 12 towards the shaft 105.

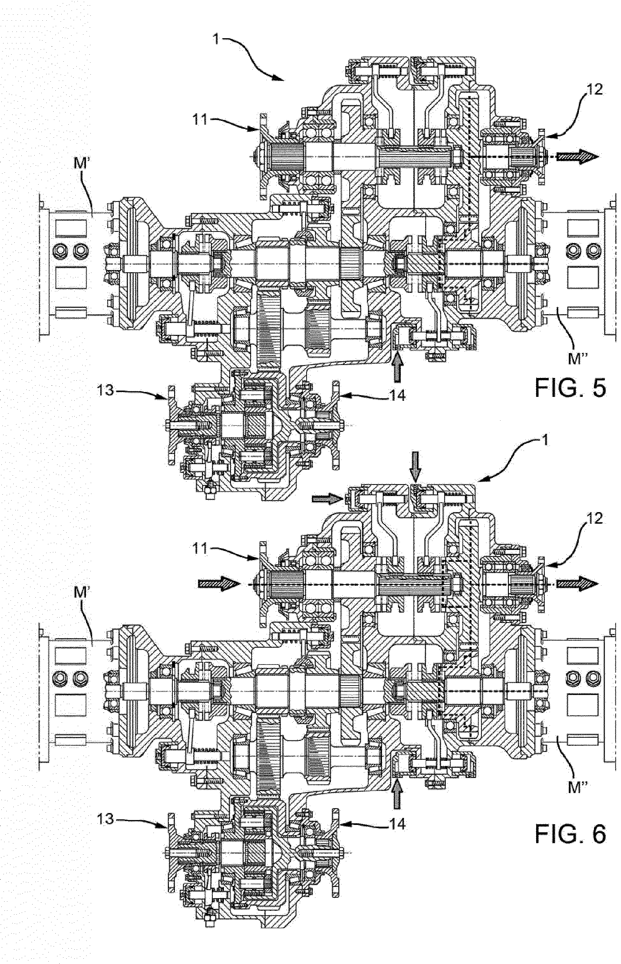

Figure 5 illustrates a third operating condition of the torque distributor system relating to the operation, in purely electric mode, of the operating element 103, i.e. of the hydraulic pump. In this operating condition, the actuator means 30 make the fourth gear wheel 21 integral with the second support shaft 23 so that torque provided by the second electric machine M" that operates as an electric motor passes via the second power take-off 12 towards the shaft 105.

Figure 6 illustrates a fourth operating condition of the torque distributor system relating to the operation, in hybrid mode, of the operating element 103, i.e. of the hydraulic pump. In this operating condition, the actuator means 30 make the first and second rotating shaft 15, 16 and the fourth gear wheel 21 integral with the second support shaft 23 so that the torque provided by the shaft 104 through the first power take-off 11 passes not only via the second power take-off 12 towards the shaft 105 but also to the second electric machine M" that operates as an electric generator.

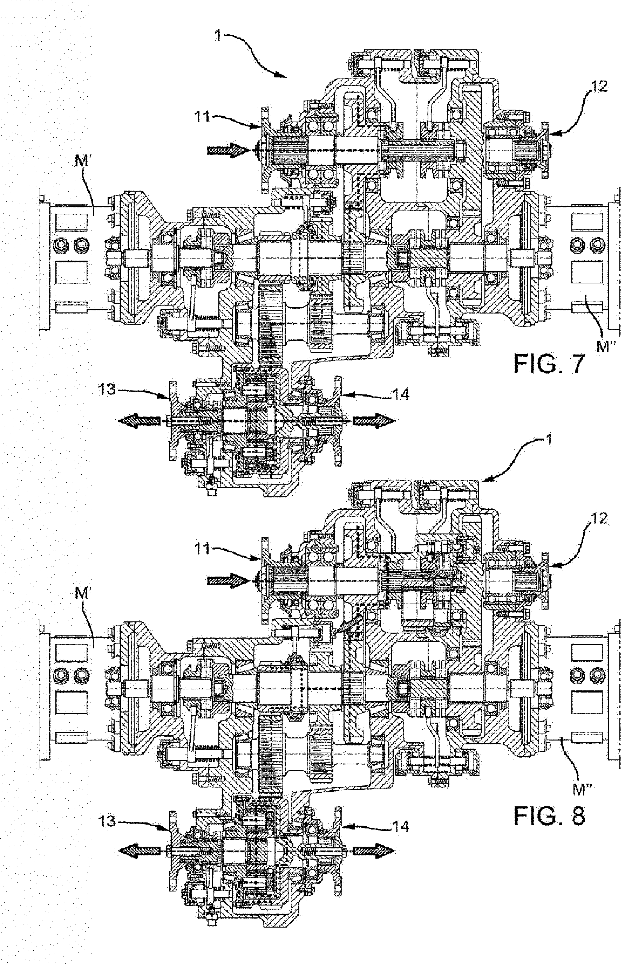

Figures 7 and 8 illustrate a fifth and sixth operating condition of the torque distributor system relating to the operation in full mechanical drive mode. In this operating condition, the actuator means 30 make the first gear wheel 17 on the first rotating shaft 15 and the sixth (Figure 7) or fifth (Figure 8) gear wheel 25, 26 integral with the first support shaft 21. In this configuration, the torque provided by the shaft 104 to the first power take-off 11 flows passing via a first speed jump between the wheels 17 and 19, a second speed jump between the sixth and eighth or fifth and seventh wheel towards the planetary gear 35 and, restarted from there, towards the shafts 41, 42 to the third and fourth power take-offs and, thus, to the axles 102.

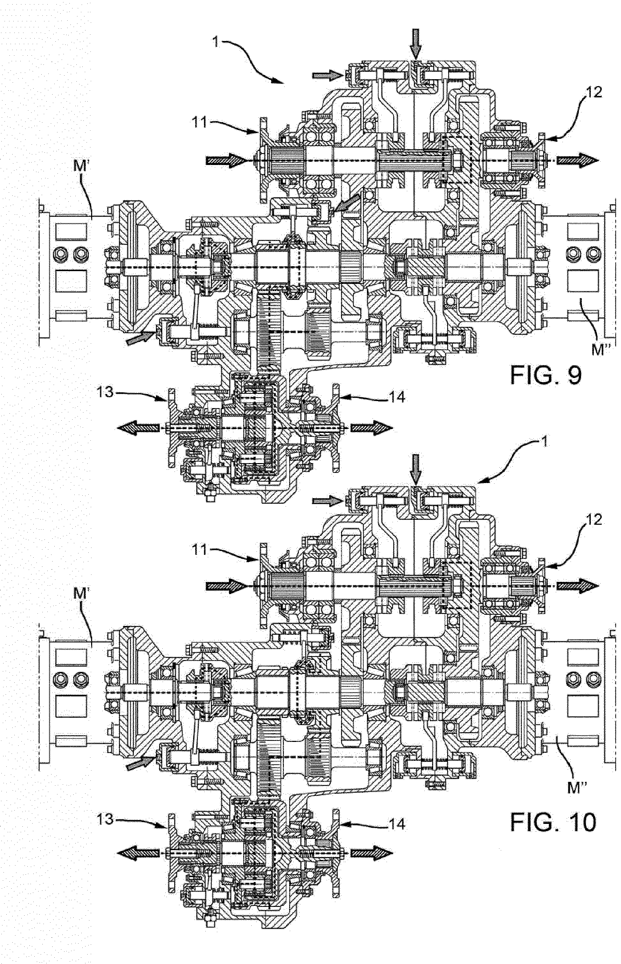

Figures 9 and 10 illustrate a seventh and eighth operating condition of the torque distributor system relating to the operation in purely electric mode and dragging the pump 103 in purely mechanical mode. In this operating condition, the actuator means 30 make the first and second rotating shaft 15, 16 integral so that the mechanical torque from the shaft 104 can flow between the first and second power take-offs 11, 12 towards the pump 103. On the other hand, the actuator means 30 make the fourth support shaft 24 integral with the first support shaft 21 and one of either the fifth (Figure 9) and sixth (Figure 10) gear wheel integral with the first support shaft 21. In this configuration, the torque provided by the first electric machine M' that operates as an electric motor flows via a speed jump between the sixth and eighth or fifth and seventh wheel towards the planetary gear 35 and, restarted from there, towards the shafts 41, 42 to the third and fourth power take-offs and, thus, to the axles 102.

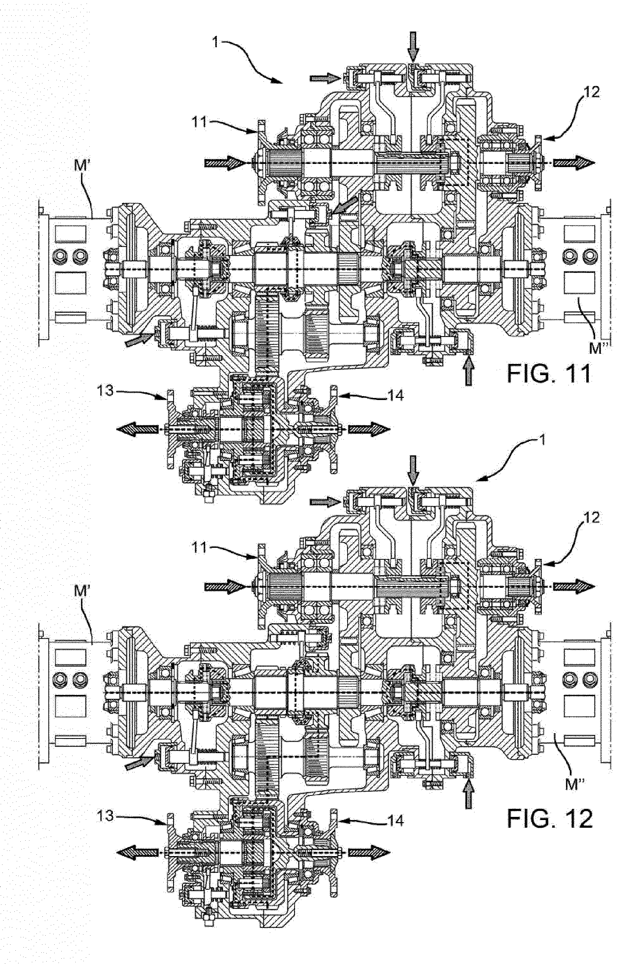

Figures 11 and 12 illustrate a ninth and tenth operating condition of the torque distributor system relating to the operation in purely electric drive mode and dragging the pump 103 in purely mechanical mode. The operation is similar to that described for Figures 9 and 10 with the addition of the integral connection between first and second support shaft 21, 22 so that the second electric machine M" may also provide torque to the first support shaft 21 together with the first electric machine M'.

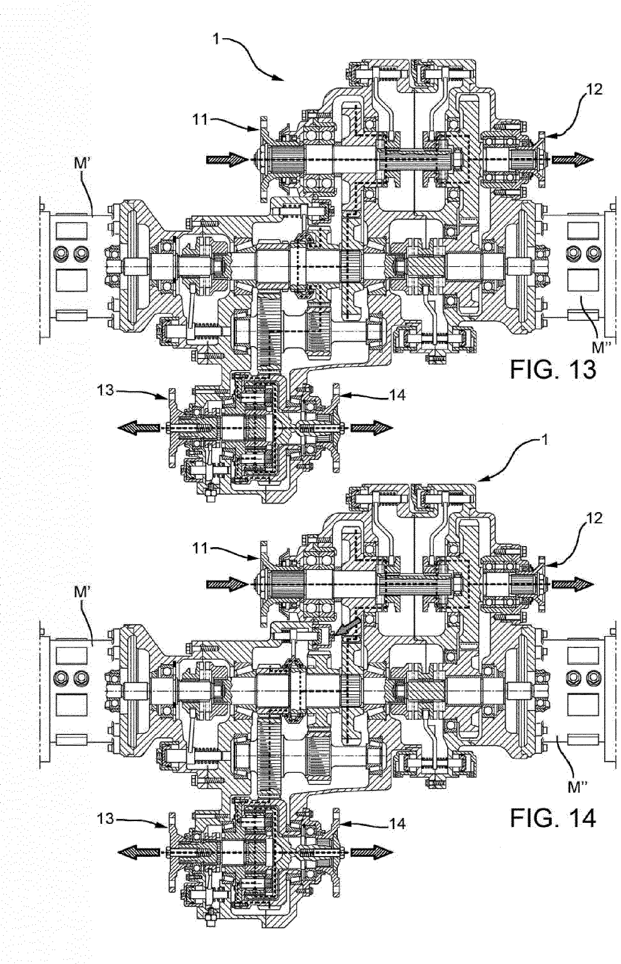

Figures 13 and 14 illustrate an eleventh and twelfth operating condition of the torque distributor system relating to the operation in purely mechanical drive mode and dragging the pump 103 in purely mechanical mode. The operation is a combination of the above-described first operating mode with the fifth and sixth operating mode and, thus, is not additionally described, for brevity.

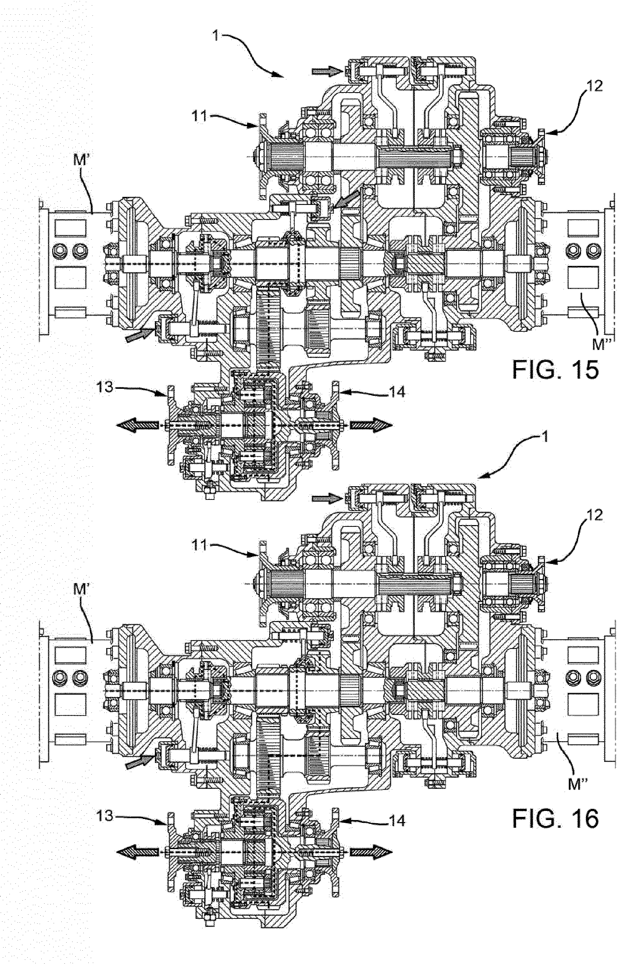

Figures 15 and 16 illustrate a thirteenth and fourteenth operating condition of the torque distributor system relating to the operation in purely electric mode. In this operating condition, the actuator means 30 make the fourth and first support shaft 24, 21 and the sixth (Figure 16) or fifth (Figure 15) gear wheels 25, 26 integral with the first support shaft 21. In this configuration, the torque provided by the first electric machine M' that operates as a motor flows passing via a speed jump between the sixth and eighth or fifth and seventh wheels towards the planetary gear 35 and, restarted from there, towards the shafts 41, 42 to the third and fourth power take-offs and, thus, to the axles 102.

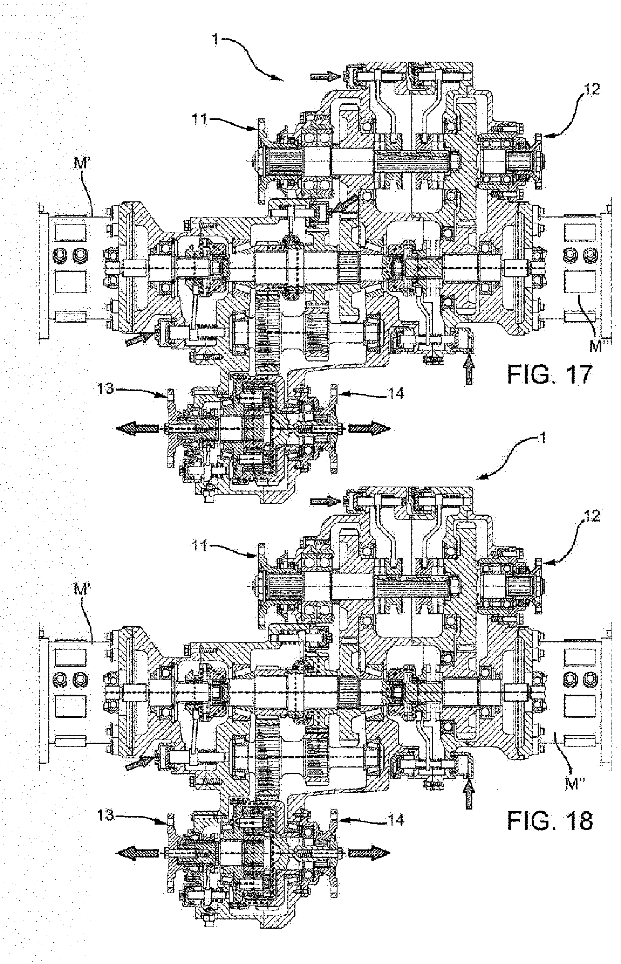

Figures 17 and 18 illustrate a fifteenth and sixteenth operating condition of the torque distributor system relating to the operation in purely electronic drive mode. The operation is similar to that described for Figures 15 and 16 with the addition of the integral connection between first and second support shaft 21, 22 so that the second electric machine M" may also provide torque to the first support shaft 21 together with the first electric machine M' .

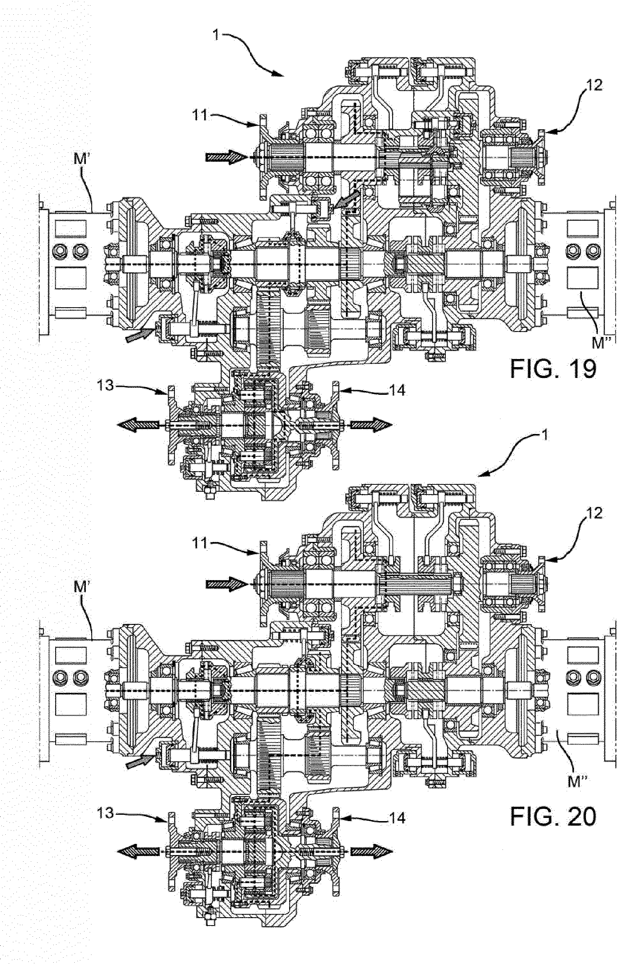

Figures 19 and 20 illustrate a seventeenth and eighteenth operating condition of the torque distributor system relating to the operation in hybrid drive mode. In this operating condition, the actuator means 30 make the first gear wheel 17 on the first rotating shaft 15 and the sixth (Figure 7) or fifth (Figure 8) gear wheel 25, 26 integral with the first support shaft 21. In addition, the first support shaft 21 is made integral by rotation with the fourth support shaft 24. In this configuration, the torque provided by the shaft 104 to the first power take-off 11 flows passing via a first speed jump between the wheels 17 and 19, a second speed jump between the sixth and eighth or fifth and seventh wheels towards the planetary gear 35 adding to the torque provided by the first electric machine M' that operates as a motor and, restarted from there, towards the shafts 41, 42 to the third and fourth power take-offs and, thus, to the axles 102.

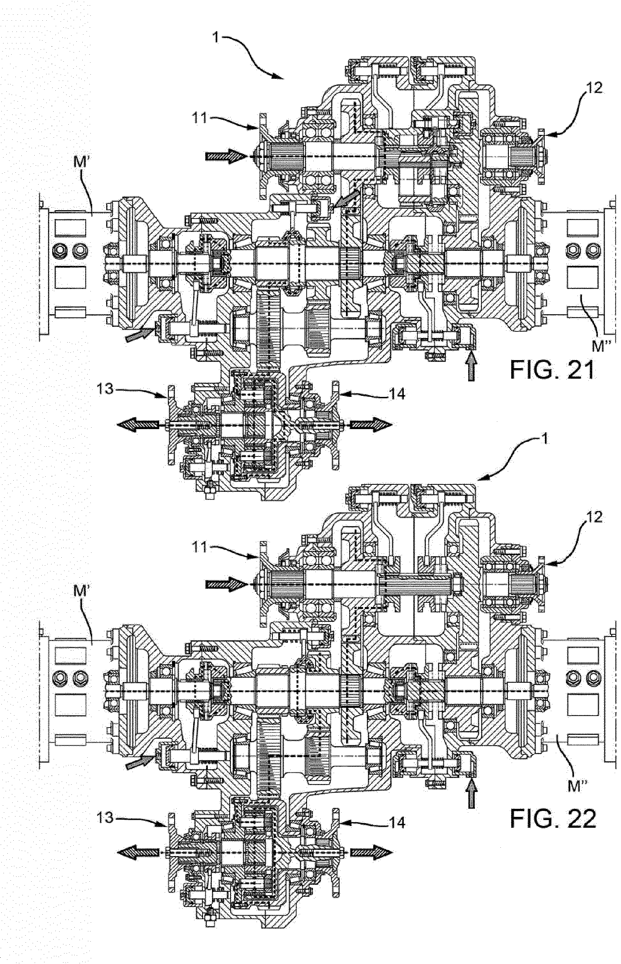

Figures 21 and 22 illustrate a nineteenth and twentieth operating condition of the torque distributor system relating to the operation in hybrid drive mode. The operation is similar to that described for Figures 19 and 20 with the addition of the integral connection between first and second support shaft 21, 22 so that the second electric machine M" may also provide torque to the first support shaft 21 together with the first electric machine M'.

Clearly, while not described for brevity's sake, additional operating conditions, such as regenerative braking, are not illustrated and described for brevity but can be executed and deduced from the combinations of connection provided by the transmission 8.

From the above, the advantages of a torque distributor system according to the invention are clear.

The distributor system proposed enables the distribution in an extremely versatile way between different sources of torque and various driving axle vehicle configurations.

In fact, if one of either the operating element or the front or rear axle is not necessary for use, it is enough to insulate the corresponding power take-off using covers.

In this way, therefore, with the same torque distributor system, they can be provided in a versatile way in axle configurations of 4X4, 6X6, 8X8, 10X10. It is also permitted to operate operating elements such as hydraulic pumps or other elements designed for the purpose of transporting goods, for emergency or military systems.

The above-mentioned versatility is also valid from a torque transmission point that may occur in a purely mechanical, hybrid, or purely electric way.

In view of the above, since it is suitable for a large variety of purposes, the costs of manufacturing and enabling a lot of vehicle customisation are reduced.

In addition, the fact that the transmission is housed inside a single space and the fact that the power take-offs can be insulated when not used, increases the service life of the transmission.

The particular arrangement of the transmission allows, in a compact space, the attainment of an elevated transmission jump and various speed changes.

Finally, it is clear that changes may be made to the torque distributor system, and variations produced thereto, according to this invention that, in any case, do not depart from the scope of protection defined by the claims.

The transmission 8 described, the actuator means and the selector sleeves could comprise elements with different shapes but similar functions.

Similarly, the arrangement of the power take-offs could vary and additional reduction stages could be included between them.

Clearly, though gear wheels with straight teeth were described, different types of gear wheels and teeth could be included.

Again, additional construction elements omitted from the description and outlined in the figures for brevity, could be included to enable the correct assembly of shafts and gear wheels.

## Claims

1. Vehicle (100) comprising a moto-propulsion unit (101), a plurality of axles (102) and a distributor system (1) operatively connected to said moto-propulsion unit (101) and to at least one of said plurality of axles (102) for distributing torque among themselves,
said distributor system (1) comprising a casing (2) able to define a space (7) configured to house a transmission (8), said casing (2) defining a plurality of openings (5, 6, 7, 8) configured to house respective power take-offs (11, 12, 13, 14) connected to each other by said transmission (8), a first power take-off (11) being connectable to said propulsion unit (101), a second power take-off (12) being connectable to an operating element (103) of said vehicle, a third and fourth power take-off (13, 14) being connectable being connectable to one or more of said axles (102),
said distributor system (1) comprises at least a pair of electric machines (M', M") carried by said casing (2) and operatively connectable by said transmission (8) to said power take-offs (11, 12, 13, 14).

2. Vehicle according to Claim 1, in which said first and second power take-offs (11, 12) are coaxial with each other along an axis (A).

3. Vehicle according to claim 1 or 2, in which said third and fourth power take-offs (13, 14) are coaxial with each other along an axis (B).

4. Vehicle according to one of claims 1 to 3, in which said first and second electric machines (M', M") are coaxial with each other along an axis (D).

5. Vehicle according to claims 2, 3 and 4, in which said axes (A, B, D) are parallel to each other.

6. Vehicle according to one of the preceding claims, wherein said transmission (8) comprises a first rotating shaft (15) and a second rotating shaft (16) respectively integral with rotation with said first power take-off (11) and said second power take-off of power (12), said transmission (8) comprising a selector (20) configured to selectively connect together said first and second rotating shafts (15, 16).

7. Vehicle according to one of the preceding claims, wherein said transmission (8) comprises a first, second and fourth support shaft (22, 23, 24) operatively connectable to said power take-offs (11, 12, 13, 14) and said first and second electric machine (M', M"),
wherein said second and fourth support shafts (23, 24) are integral with the rotation of said second and first electric machine (M", M') and wherein said first support shaft (22) is operatively connected to called third and fourth power take offs (13, 14).

8. Vehicle according to claim 6 and 7, wherein said first support shaft (22) and said first rotary shaft (15) respectively carry a gear wheel (17, 19) one of said gear wheels (17, 19) being integral with the respective shaft and the other being selectively connectable to the respective shaft via a selector (20), and in which said second support shaft (23) and said second rotating shaft (16) respectively carry a gear wheel (18, 21) one of said gear wheels (18, 21) being integral with the respective shaft and the other being selectively connectable to the respective shaft by means of a selector (20).

9. Vehicle according to claim 7 or 8, wherein said fourth and second rotary shafts (24, 23) can be selectively connected integral with rotation to said first rotary shaft (22) by means of respective selectors (20).

10. Vehicle according to one of the preceding claims, wherein said transmission (8) comprises a gear (35) of the differential type connecting said third and fourth power take-offs (13, 14).

11. Vehicle according to claim 10, wherein said gear (35) is of the epicyclic type.

12. Vehicle according to claim 10 or 11, wherein said transmission (8) comprises a selector (20) configured to block the differential function of said gear (35).

13. Vehicle according to one of claims 11 or 12 when dependent on 11, in which said third power take-off (13) is integral with a sunwheel (39) of said gear (35) and said fourth power take-off (14) is integral with a rotating casing (40) of said gear.

14. Vehicle according to claims 11, 13 or 12 when dependent on 11, wherein said first support shaft (22) is connected to a carrier (36) of said gear (35).

15. Vehicle according to one of claims 10 to 14, wherein said gear (35) is connected to said first support shaft (22) via a speed jump.

16. Vehicle according to claim 15 in which said speed jump is achieved through a third support shaft (29) carrying at least one gear wheel (27, 28) configured to engage with a respective gear wheel (25, 26) carried from said first support shaft (22), one of said at least one gear wheel (25, 26, 27, 28) being integral with the respective shaft and the other being selectively connectable to the respective shaft via a selector (20).

17. Vehicle according to claim 16, wherein said first support shaft (22) carries two gear wheels (25, 26) both carried selectively rotationally free and said third support shaft (29) carries two gear wheels (27, 28) rotationally fixed thereto, one of said gear wheels (27, 28) carried by said third support shaft (29) meshing with said gear (35).

18. Vehicle according to one of claims from 6 to 17, wherein said selectors (20) are controlled by actuator means (30) .

19. Vehicle according to claim 18, wherein actuator means (30) are pneumatic actuators.

20. Vehicle according to Claim 18 or 19, comprising an electronic unit configured to control said actuator means (30) according to a request for operating condition of said distributor system (1).

21. Vehicle according to one of the preceding claims, wherein said operating element (103) is a hydraulic pump.

22. Vehicle according to one of the preceding claims, wherein said casing (2) comprises covers able to insulate one of said second, third or fourth power take-offs (12, 13, 14) when they are not respectively connected to said operating element (103) and to said at least one of said axles (102).
